Europäisches Patentamt

European Patent Office

Office européen des brevets

(19)

(11) Publication number: **0 115 833 B1**

## EUROPEAN PATENT SPECIFICATION

(12)

(45) Date of publication of patent specification: **07.08.91**   (51) Int. Cl.5: **C08F 10/00**, C08F 4/64,
                                                                          C08F 36/04

(21) Application number: **84100871.7**

(22) Date of filing: **27.01.84**

(54) Polyolefin polymerization process and catalyst.

(30) Priority: **28.01.83 US 461801**

(43) Date of publication of application:
**15.08.84 Bulletin 84/33**

(45) Publication of the grant of the patent:
**07.08.91 Bulletin 91/32**

(84) Designated Contracting States:
**AT BE CH DE FR GB IT LI LU NL SE**

(56) References cited:
**EP-A-00 604 43**
**GB-A- 1 536 171**
**GB-A-12 915 52**

(73) Proprietor: **PHILLIPS PETROLEUM COMPANY**
**5th and Keeler**
**Bartlesville Oklahoma 74004(US)**

(72) Inventor: **Hawley, Gil Ross**
**1022 N. Wyandotte**
**Dewey Oklahoma 74029(US)**
Inventor: **Masino, Albert Peter**
**1625 S.E. Smyser Drive**
**Bartlesville Oklahoma 74006(US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Post-**
**fach 86 06 20**
**W-8000 München 86(DE)**

**Description**

The present invention relates to a process for making a catalyst useful for the polymerization of olefins. In EP-A-0 060 443 there is disclosed a number of new high activity polymerization catalysts. One of those catalyst types disclosed was prepared by reacting reactants comprising (a) a magnesium dihalide, (b) a benzoic acid ester, and (c) a titanium compound, such as an alkoxytitanium compound, to produce a first catalyst component, then reacting that component with a second catalyst component comprising a precipitating agent, and then reacting the resulting solid product with a halogenating agent, such as $TiCl_4$.

The catalysts of the examples in that application were prepared using commercially available "anhydrous" magnesium dichloride. The term "anhydrous" magnesium dichlorides as conventionally used is used to indicate magnesium chlorides having no more than about 1 weight % of water. Typically, the level of water in commercially obtained "anhydrous" magnesium chloride is much lower than 1 weight %.

GB-A 1 291 552 discloses a process for making an olefin polymerization catalyst comprising a reaction product wherein a hydrated magnesium dihalide containing from 1 to 6 moles of water per mole of magnesium dihalide is reacted with a halogen-containing titanium or vanadium compound under conditions such that the hydrated magnesium dihalide is transformed at least on the surface into an anhydrous magnesium dihalide, which product is then activated with a hydride or organometallic compound of a metal of Groups I, II or III of the Periodic System.

GB-A 1 536 171 discloses a catalyst for olefin polymerization comprising the reaction product of a halogen-containing titanium compound and a hydrated magnesium chloride in the form of spheroidal particles 10 to 70 microns in diameter, the said hydrate containing 10 to 45 % by weight of water and being the product of the partial dehydration of a hydrated magnesium chloride made by reaction of electrolytic magnesium with hydrochloric acid and subsequent fractional cristallisation.

In both GB-A 1 291 552 and GB-A 1 536 171 a combination of a benzoic acid ester and an alkoxytitanium compound is not used.

The presently claimed invention is based upon the discovery that the activity of the catalyst of EP-A-0 060 443 can be improved significantly by adding specified amounts of water to "anhydrous" magnesium dihalides.

Summary of the Invention

The present invention provides a process for making an improved catalyst and its use. The catalyst preparation involves (1) reacting a magnesium dihalide, a benzoic acid ester, and an alkoxytitanium compound to form a first catalyst component, (2) reacting said first catalyst component with an organoaluminum halide to obtain a solid product, and then (3) reacting the resulting solid product with a halogenating agent comprising a titanium halide. The improvement comprises adding water to the magnesium dihalide in an amount to result in from above 0.50 to 2 moles of water per mole of magnesium dihalide.

Detailed Description of the Invention

The presently preferred magnesium dihalide is "anhydrous" magnesium dichloride. A commercial anhydrous magnesium dichloride typically contains no more than 1 weight percent water the latter corresponding to the formula $MgCl_2 \cdot 0.05\ H_2O$.

According to the invention, the starting magnesium dihalide, e.g. commercial anhydrous magnesium dichloride, is combined with water in an amount of from above 0.05 to 2 moles of water per mole of magnesium dihalide, including both the initially contained water and the added water, preferably from 0.50 to 2, more preferably 0.5 to 1.5, each moles of water per mole of magnesium dihalide. The greatest improvements are observed when the magnesium dihalide starting material is substantially free of organic compounds. The level of water can be determined using routine analysis techniques. Typically, such techniques involve the use of Karl Fischer titration plus other conventional techniques such as X-ray diffraction and elemental analysis for determining whether there are significant amounts of other materials, particularly MgO, associated with the $MgCl_2$.

The alkoxytitanium compounds are those titanium compounds in which the titanium is bonded to at least one oxygen atom and the oxygen atom is bonded to at least one alkyl radical. The preferred alkoxytitanium compounds are those of the formula

$Ti(OR)_4$

2

wherein each R is individually selected from an alkyl group containing 1 to 20 carbon atoms and each R can be the same or different. The most preferred are those in which each alkyl group contains 1 to 10 carbon atoms.

The molar ratio of the alkoxytitanium compound to the metal halide compound can be selected over a relatively broad range. Generally, the molar ratio of alkoxytitanium to magnesium dihalide is in the range of 10/1 to 1/10, more preferably 2/1 to 1/2.

The term benzoic acid ester is used generically to include substituted as well as unsubstituted benzoic acid esters. Typical examples include ethyl benzoate, ethyl p-methoxybenzoate, ethyl toluate, ethyl p-butoxybenzoate, and butyl benzoate. The preferred benzoic acid esters are those having 8 to 12 carbon atoms per molecule.

In an especially preferred embodiment, a phenol is employed in conjunction with the benzoic acid ester in making the first catalyst component. The term "phenol" is used herein to refer to substituted as well as unsubstituted phenols. Typical examples include phenol, o-methyl phenol, m-methyl phenol, p-methyl phenol, 4-phenyl phenol, o-fluorophenol, m-fluorophenol, p-fluorophenol, p-sec-butyl phenol, p-ethyl phenol, p-isopropyl phenol, p-tertbutyl phenol, p-methoxy phenol, p-cyanophenol, and p-nitrophenol.

The currently preferred combination of ester and phenol is 4-phenyl phenol and ethyl benzoate. The total number of moles of 4-phenyl phenol and ethyl benzoate employed can affect the activity and selectivity of the resulting catalyst. Typically, the ratio of the sum of the moles of those two electron donors to the moles of the titanium alkoxide are in the range of 5/1 to 1/5, more preferably 3/1 to 2/1. Most preferably $\frac{1}{2}$ mole of ethyl benzoate is employed per mole of titanium alkoxide.

The metal halide compound and the transition metal compound employed in the present invention are normally mixed together by heating, e.g., refluxing, in a suitable dry (essential absence of water) solvent or diluent, which is essentially inert to these components and the product produced. By the term "inert" is meant that the solvent does not chemically react with the dissolved components such as to interfere with the formation of the product or the stability of the product once it is formed. Such solvents or diluents include, for example, n-pentane, n-heptane, methylcyclohexane, toluene and xylenes. It is emphasized that aromatic solvents are preferred, such as for example xylene because the solubility of the metal halide compound and the transition metal compound is higher in aromatic solvents as compared to aliphatic solvents, particularly at low temperatures. Such mixing temperatures are generally within the range of from 0 to 50°C and preferably from 10 to 30°C. Generally the amount of solvent or diluent employed can be selected over a broad range. Usually the amount of solvent or diluent is within the range of 20 to 100 mℓ per gram of metal dihalide. The temperature employed during the heating step can also be selected over a broad range. Normally the heating temperature is within the range of 15 to 150°C when the heating step is carried out at atmospheric pressure. Obviously, the heating temperatures employed could be higher if the pressure employed is above atmospheric pressure. The pressure employed during the heating step does not appear to be a significant parameter.

Generally, the time required for heating the reactants to make the first catalyst component is within the range of 5 minutes to 10 hours, although in most instances a time within the range of 15 minutes to 3 hours is sufficient.

The reaction of the organoaluminum halide with the first catalyst component can be carried out by merely adding the organoaluminum halide to a solution of the first component. It is, however, currently preferred to add a hydrocarbon solution of the halide to the first component solution.

The temperature employed for reacting the second catalyst component, i.e., the organoaluminum halide, and the first catalyst component can be selected over a broad range. Generally, the temperature employed is within a range off 0 to 50°C or higher, while temperatures within the range of 20 to 30°C were most often employed. Since heat is evolved when the first catalyst component and the second catalyst component are mixed, the mixing rate is adjusted as required and additional cooling is employed in order to maintain a relatively constant mixing temperature. It is noted with respect to mixing the first and second components that the order of addition is not important and either component can be added to the other. After completing the mixing, the resulting slurry is stirred or agitated for a sufficient time, generally within a range of 15 minutes to 5 hours to insure that mixing of the components is complete. Thereafter, stirring is discontinued and the solid product recovered, e.g. by filtration or decantation. The product is then washed with a suitable material such as a hydrocarbon, e.g., n-pentane, n-heptane, cyclohexane, benzene and xylenes, to remove any soluble material which may be present. The product is then dried and stored under dry nitrogen.

The molar ratio of the transition metal compound of the first catalyst component to the second catalyst component can be selected over a relatively broad range. Generally, the molar ratio of the transition metal

3

of the first catalyst component to the second catalyst component is within a range of from 10:1 to 1:10 and more generally within a range of 2:1 to 1:3 since a molar ratio within the latter range usually produces a catalyst which can be employed as an especially active olefin polymerization catalyst.

Generally, the reaction between solid product resulting from the reaction of the first and second components with the halide ion exchanging source can be carried out neat or in a liquid medium in which the halide ion exchanging source is soluble. The product from step (2) is generally in a liquid diluent when contacted with the halide ion exchanging source. Any suitable diluent can be employed. Examples include normally liquid hydrocarbon such as n-pentane, n-heptane, cyclohexane, benzene, and xylene.

The temperature employed in step (3) can be selected over a relatively broad range, generally in the range of -25 to +250°C, preferably 0 to 200°C, with temperatures of 100°C being most preferred.

The treating time can also be selected over a broad range and generally is within the range of 10 minutes to 10 hours. While the weight ratio of the halide ion exchanging source to the product of step (2) can be selected over a relatively broad range, the weight ratio of the halide ion exchanging source to the product of step (2) is generally within a range of 10:1 to 1:10 and more generally from 7:1 to 1:4. Following the treatment of the product of step (2) with the halide ion exchanging source the surplus halide ion exchanging source is removed by washing the solid catalyst with a dry (essential absence of water) liquid such as a hydrocarbon of the type previously disclosed, n-hexane, or xylene for example. The resulting catalyst, after drying, is stored under dry nitrogen.

The currently preferred titanium halide for use as the halide ion exchanging source is $TiCl_4$. In an especially preferred embodiment, the $TiCl_4$ is employed in conjunction with a halide of silicon such as $HSiCl_3$ or $SiCl_4$.

The water can be combined with the magnesium dihalide in any suitable manner. Generally, it has been found convenient to add the predetermined amount of water to a dispersion of the dihalide in a dry liquid, typically a hydrocarbon, for example xylene or heptane, and then to stir the mixture for a time sufficient to assure that the added amount of the water has been combined with the dihalide.

The catalyst of the present invention can be used in the polymerization of olefins. Olefins which can be homopolymerized or copolymerized with the invention catalysts include aliphatic mono-1-olefins. While the invention would appear to be suitable for use with any aliphatic mono-1-olefin, those olefins having 2 to 18 carbon atoms are most often used. The mono-1-olefins can be polymerized according to the present invention employing either a particle form process, a gas phase process, or a solution form process. Aliphatic mono-1-olefins can be copolymerized with other 1-olefins and/or with other smaller amounts of other ethylenically unsaturated monomers, such as 1,3-butadiene, isoprene, 1,3-pentadiene, styrene, alpha-methylstyrene, and similar ethylenically unsaturated monomers which do not impair the catalyst.

The catalysts of this invention can also be utilized to prepare homopolymers and copolymers of conjugated diolefins. Generally the conjugated diolefins contain 4 to 8 carbon atoms per molecule. Examples of suitable conjugated diolefins include 1,3-butadiene, isoprene, 2-methyl-1,3-butadiene, 1,3-pentadiene, and 1,3-octadiene. Suitable comonomers, besides the conjugated diolefins listed above include mono-1-olefins previously described and vinylaromatic compounds generally. Some suitable vinylaromatic compounds are those having from 8 to 14 carbon atoms per molecule, and include for example styrene and various alkylstyrenes, such as 4-ethylstyrene and such as 1-vinylnaphthalene.

The weight percent of the conjugated diolefin in the copolymerization mixture can be selected over a relatively broad range. Generally the weight percent of the conjugated diolefin is from 10 to 95 weight percent and the other comonomers are from 90 to 5 weight percent. However, the weight percent of the conjugated diolefin is preferably from 50 to 90 weight percent and the other comonomers are from 50 to 10 weight percent.

The inventive catalysts are particularly well suited for producing stereoregular polypropylene, many offering potential for high rates as well as low soluble polymer formation.

Polymerization may be conducted in a liquid phase, in the presence or absence of an inert hydrocarbon diluent, or in a gas phase. In the polymerization of propylene, particularly satisfactory results have been attained operating in the presence of an aliphatic or aromatic hydrocarbon diluent, liquid under the polymerization conditions, such as propylene, toluene and gasoline.

While it may not be necessary in all instances to employ a cocatalyst with the catalyst of the present invention, the use of cocatalysts is recommended for best results. The organometallic cocatalysts suitable for use in accordance with the invention can be selected from among the hydrides and organometallic compounds of metals of Groups IA, II, and IIIA of the Periodic Table. Of the organometallic cocatalysts, organoaluminum compounds such as those described above as suitable for use as the second component of the catalyst, are preferred with the most preferred organoaluminum cocatalysts being compounds of the formula $R_3Al$ which include, for example, trimethylaluminum, triethylaluminum, triisopropylaluminum, tridecylaluminum, trieicosylaluminum, tricyclohexylaluminum, triphenylaluminum, 2-methylpentyldiethylaluminum, and triisoprenylaluminum. Triethylaluminum is preferred since this compound produced excellent results in the runs hereafter described.

The molar ratio of the organometallic compound of the cocatalyst to the transition metal compound of the first catalyst component is not particularly critical and can be selected over a relatively broad range. Generally, the molar ratio of the organometallic compound of the cocatalyst to the transition metal compound of the first catalyst component is within a range of 1:1 to 1500:1. For catalyst systems wherein the cocatalyst comprises at least one organoaluminum compound typically there is employed 0.25 to 15 milligrams of the titanium-containing component per mmole of organoaluminum cocatalyst.

The catalyst is preferably used with a multicomponent cocatalyst system comprising triethylaluminum (TEA), an aromatic ester such as ethyl anisate (EA), ethyl benzoate (EB) or methyl-p-toluate (MPT), and diethylaluminum chloride. Best selectivity (stereospecificity) is obtained when the TEA:ester mole ratio is about 2:1. The DEAC, when used, helps in increasing activity. Generally, a TEA:ester:DEAC mole ratio ranging from about 2:1:0.5-3 and preferably about 2:1:2 is employed in bench scale testing for batch polymerization. For a continuous, larger scale process, it becomes possible, for example, when using TEA and MPT to use TEA:MPT mole ratios of 3:1 to 5:1 and dispense with the DEAC entirely. A decreased DEAC level is desirable when employing a flash process to recover polymer since the amount of chloride remaining in the polymer is dependent to some extent on the DEAC level.

The polymerization process according to the present invention employing the catalysts and cocatalysts as above described can be performed either batchwise or continuously. In a batch process, for example, a stirred autoclave is prepared by first purging with nitrogen and then with a suitable compound, such as isobutane for example. When the catalyst and cocatalyst are employed either can be charged to the reactor first or they can be charged simultaneously through an entry port under an isobutane purge. After closing the entry port, hydrogen, if used, is added, and then a diluent such as isobutane is added to the reactor. The reactor is heated to the desired reaction temperature, which for polymerizing ethylene, for example, is, for best results, generally within a range of 50 to 120°C and the monomer is then admitted and maintained at a partial pressure within a range of 0.5 MPa to 5.0 MPa (70-725 psig) for best results. At the end of the designated reaction period, the polymerization reaction is terminated and the unreacted olefin and isobutane are vented. The reactor is opened and the polymer, such as polyethylene, is collected as a free-flowing white solid and is dried to obtain the product.

In a continuous process, for example, a suitable reactor such as a loop reactor is continuously charged with suitable quantities of solvent or diluent, catalyst, cocatalyst, polymerizable compounds and hydrogen, if any, and in any desirable order. The reactor product is continuously withdrawn and the polymer recovered as appropriate, generally by flashing the diluent (solvent) and unreacted monomers and drying the resulting polymer.

For optimum productivity of polymer of low solubility in the continuous polymerization of propylene preferably the cocatalyst comprising the trialkylaluminum-electron donor is contacted with the titanium-containing catalyst prior to being exposed to liquid propylene.

The olefin polymers made with the catalysts of this invention are useful in preparing articles by conventional polyolefin processing techniques such as injection molding, rotational molding, extrusion of film, and the like.

A further understanding of the present invention and its advantages will be provided by the following examples.

Example I (Catalyst Preparation)

A series of catalysts was prepared using a commercially available "anhydrous $MgCl_2$". Analysis showed that the material actually contained about 1 weight percent water. The material thus can be said to have the formula $MgCl_2 \cdot 0.05H_2O$. Some of the catalysts were prepared using the $MgCl_2 \cdot 0.05H_2O$ without the addition of further water. The others were each prepared by placing 19.8 g of the $MgCl_2 \cdot 0.05H_2O$ in dry xylene in a one quart (946 ml) beverage bottle, adding specific amounts of water, and stirring overnight at room temperature. Then in each catalyst preparation, the resulting $MgCl_2$ (with additional water added or not) was combined with 25.0 g (0.147) mole of 4-phenylphenol and 35.8 g (0.105 mole) of titanium tetra-n-butoxide.

The reaction mixture, with stirring, was heated at 100°C for 15 minutes, then 7.5 ml (7.89 g, 0.053 mole) of ethyl benzoate (EB) were added and the stirred mixture heated an additional 45 minutes at 100°C. The samples were cooled to about 25°C, each was diluted with 500 ml of xylene (mixed xylenes as commercially sold) and each stirred mixture was treated dropwise with 125 ml of a 25 weight percent solution of ethylaluminum sesquichloride in n-heptane (EASC) equivalent to 23.8 g or 0.096 mole of EASC. Dark brown solutions were obtained along with precipitates. Each precipitate was isolated by centrifugation, slurried in n-hexane and again centrifuged and the washing with n-hexane repeated until the supernatant liquid was nearly colorless. The isolated solids (A) were dried overnight by weathering in the dry box. 20 g of each solid was then heated for 1 hour at $100°$ C with stirring in a solution comprising 360 m$\ell$ (621.4 g, 3.28 moles) of $TiCl_4$, 270 m$\ell$ (361.8 g, 2.67 moles) of $HSiCl_3$ and 90 m$\ell$ (135.0 g, 0.80 mole) of $SiCl_4$. Each reaction product (B) was isolated by vacuum filtration, washed with n-hexane until the filtrate was colorless and dried by standing overnight in the dry box. The results are reported in Table I.

## Table I

| Cat. No. | Water Added g | Water Added Mole | A Product Color | A Product Wt., g | B Product (From 20 g A Product Color | B Product (From 20 g A Product Weight, g |
|---|---|---|---|---|---|---|
| 1 | 0 | - | Yellow | 34.7 | Light purple | 17.1 |
| 2 | 0 | - | Yellow | 38.2 | Light purple | 17.4 |
| 3 | 1.8 | 0.1 | Orange-yellow | 35.6 | Light purple | 15.7 |
| 4 | 3.6 | 0.2 | Orange-yellow | 35.7 | Light purple | 18.5 |
| 5 | 5.4 | 0.3 | Orange-yellow | 46.2 | Dark purple | 15.2 |
| 6 | 7.2 | 0.4 | Orange-yellow | 49.8 | Dark purple | 18.6 |

Example II (Polymerization)

A sample of each catalyst of Example I was tested for efficacy in propylene polymerization at $70°$ C in a stirred stainless steel reactor of 1 liter capacity, using a cocatalyst system comprising a premixed solution of 3.23 m$\ell$ (2.0 mmoles) of a 0.62 M solution of triethylaluminum (TEA) in n-heptane with 0.18 m$\ell$ (1.1 mmoles) of ethyl anisate and 2.29 m$\ell$ (2.0 mmoles) of a 0.874 M solution of diethylaluminum chloride (DEAC) in n-heptane, and 25 psia (172 kPa) of hydrogen. All components were charged at about $20°$ C into the reactor about 2/3 full of liquid propylene. The reactor temperature was then brought to $70°$ C and additional liquid propylene was charged as needed to maintain the reactor liquid full during each 1 hour run.

At the conclusion of a run, the product was recovered, dried and weighed. The propylene-soluble material and xylene-soluble material and catalyst productivity in terms of kilograms polymer per gram solid catalyst per hour were determined as shown in EP-A-0 060 443. In several instances, the bulk density of the recovered polymer was also determined. The results are given in Table II.

EP 0 115 833 B1

## Table II

### Propylene Polymerization At 70°C

| No. | Catalyst Moles H₂O per Mole MgCl₂ Employed(a) | Weight mg | Productivity kg/g cat/h | Bulk Density g/ml | Solubles, Weight, % Propylene | Xylene | Total |
|---|---|---|---|---|---|---|---|
| 1 | 0.05 | 25.2 | 2.33 | 15.6 | 2.4 | 2.3 | 4.7 |
| 2 | 0.05 | 19.6 | 2.36 | 14.6 | 3.3 | 3.5 | 6.8 |
| 3 | 0.5 | 5.3 | 17.3 | 18.0 | 3.1 | 2.75 | 5.9 |
| 3 | 0.5 | 2.5 | 19.2 | 15.6 | 2.9 | 2.6 | 5.5 |
| 4 | 1.0 | 6.2 | 22.9 | 20.2 | 0.7 | 3.6 | 4.3 |
| 5 | 1.5 | 3.7 | 19.6 | 23.9 | 1.6 | 5.5 | 7.1 |
| 6 | 2.0 | 18.3 | 5.77 | 25.1 | 1.8 | 6.4 | 8.2 |

(a) total amount of water including initial water content.

The productivity results demonstrate the unexpected effects of adding $H_2O$ upon catalyst activity with all other catalyst production variables held constant. Control Runs 1 and 2 show typical results obtained with the "anhydrous" $MgCl_2$ available commercially. By analysis it was found that a minor amount of water was associated with the anhydrous salt so that the formula $MgCl_2 \cdot 0.05 H_2O$ could be assigned to it as previously noted. Catalyst productivities of catalysts derived from the anhydrous salt were about 2.3 kg polypropylene per g solid catalyst per hour at 70°C in the presence of hydrogen. On the other hand, when sufficient water was mixed with the anhydrous $MgCl_2$ to give 2.0 moles of total water content as in Run 6, the polymerization results indicated a catalyst productivity of about 5.8 kg polypropylene per g solid catalyst per hour or about double the productivity shown in control Runs 1, and 2. Also, the bulk density of the product was significantly higher than in Runs 1 and 2.

When the water associated with 1 mole $MgCl_2$ is greater than 0.05 mole but less than about 2.0 moles and particularly in the range of about 0.5 to about 1.5 moles, catalysts derived from such partially hydrated $MgCl_2$ demonstrate a dramatic, sharp increase in activity as the productivity results indicate. This is shown in Runs 3-5 where the productivity ranges from about 17 to about 23 kg polypropylene per g solid catalyst per hour. The optimum amount of water appears to be about 1 mole per mole $MgCl_2$. The bulk density of polymers made with the invention catalysts fall between the values obtained with the catalysts of Runs 1, 2 and 6. All of the catalysts yielded polymers having low soluble polymer contents, a very desirable feature in producing crystalline polypropylene for commercial applications.

### Example III

Two additional series of catalysts were prepared using the same "anhydrous $MgCl_2$" as employed in Example I. However, these series employed different combinations of halogenating agents in the last step of the catalyst preparation. One series employed a 50/50 volume mixture of $TiCl_4$ and $HSiCl_3$. The other employed a 50/50 volume mixture of $TiCl_4$ and $SiCl_4$.

The resulting catalysts were evaluated in polymerizing propylene as described in Example I. The results are summarized in Tables III and IV.

## Table III

### Catalysts Activated With $TiCl_4$ And $SiCl_4$

| Catalyst No. | $H_2O$ a) | Productivity (kg/g/h.) | % Solubles $C_3$ | Xy | Total | Melt Flow | Flex. Mod. (MPa) |
|---|---|---|---|---|---|---|---|
| 7 | 0.05 | 3.36 | 2.8 | 4.0 | 6.8 | 5.7 | 1403 |
| 8 | 0.5 | 12.80 | 0 | 5.3 | 5.3 | - | - |
| 9 | 1.0 | 28.23 | 0 | 9.3 | 9.3 | 16.0 | 1151 |
| 10 | 1.25 | 14.88 | 2.0 | 3.9 | 5.9 | 15.2 | 1417 |
| 11 | 1.5 | 14.01 | 1.7 | 3.4 | 5.2 | 12.3 | 1545 |
| 12 | 2.0 | 1.00 | 6.5 | 7.6 | 14.1 | - | - |

## Table IV

### Catalysts Activated With $TiCl_4$ And $HSiCl_3$

| Catalyst No. | $H_2O$ a) | Productivity (kg/g/h·) | % Solubles $C_3$ | Xy | Total | Melt Flow | Flex. Mod. (MPa) |
|---|---|---|---|---|---|---|---|
| 13 | 0.05 | 3.02 | 4.4 | 3.8 | 8.2 | - | - |
| 14 | 0.5 | 25.67 | 2.5 | 4.3 | 6.8 | 8.1 | 1366 |
| 15 | 1.0 | 31.28 | 0.43 | 3.8 | 4.2 | 4.8 | 1530 |
| 16 | 1.25 | 19.45 | 0.98 | 3.1 | 4.0 | 6.5 | 1446 |
| 17 | 1.5 | 20.92 | 1.1 | 5.9 | 7.0 | 11.8 | 1254 |
| 18 | 2.0 | 6.57 | 0.78 | 5.5 | 6.3 | 12.3 | 1318 |

a) total water content in moles per mole magnesium chloride

The data show that the addition of water can improve the activity even of catalysts prepared using halide ion exchanging mixtures other than $TiCl_4/SiCl_4/HSiCl_3$. Again the effect upon productivity is most beneficial when an amount of water is added that is sufficient to result in 0.5 to 1.5 moles of water per mole of $MgCl_2$.

## Claims

1. A process for making a catalyst useful for the polymerization of olefins comprising (1) reacting a magnesium dihalide, a benzoic acid ester and an alkoxytitanium compound to form a first catalyst component, (2) reacting said first catalyst component with an organoaluminum halide to obtain a solid product, and then (3) reacting the resulting solid product with a halogenating agent comprising a titanium halide,
**characterized in** that
the magnesium dihalide utilized in step (1) has been combined with water in an amount to result in from above 0.50 to 2 moles of water per mole of magnesium dihalide.

2. The process of claim 1 characterized in that said magnesium dihalide comprises magnesium dichloride;

in particular wherein said alkoxytitanium compound comprises a compound of the formula Ti(OR)$_4$ wherein each R is individually selected from alkyl groups containing 1 to 20 carbon atoms; in particular wherein said organoaluminum halide comprises ethyl aluminum sesquichloride, in particular wherein said magnesium dihalide is magnesium dichloride.

3. The process of claim 1 or 2 characterized in that a phenol is also employed in step (1) preparing the first catalyst component; in particular wherein said phenol comprises 4-phenylphenol.

4. The process of any of the preceding claims characterized in that said benzoic acid ester comprises ethyl benzoate.

5. The process of any of the preceding claims characterized in that said water is added to said magnesium dihalide to result in from 0.5 to 2, preferably 0.5 to 1.5, each moles of water per mole of magnesium dihalide.

6. The process of any of the preceding claims characterized in that said halogenating agent comprises TiCl$_4$, HSiCl$_3$ and SiCl$_4$.

7. The process of claim 6 characterized in that the respective mole ratios of TiCl$_4$, HSiCl$_3$ and SiCl$_4$ are about 4/3.3/1.

8. The process of any of the preceding claims characterized in that said alkoxy titanium compound comprises titanium tetra-n-butoxide.

9. The use of the catalyst as prepared in any of claims 1 to 8 for the polymerization or copolymerization of $\alpha$-olefins, preferably propylene.

10. The embodiment of claim 9 characterized in that the catalyst is used in combination with a cocatalyst selected from hydrides and organometal compounds of metals of groups IA, II and IIIA of the Periodic Table.

**Revendications**

1. Procédé pour fabriquer un catalyseur utile pour la polymérisation d'oléfines, comprenant (1) de faire réagir un dihalogénure de magnésium, un ester d'acide benzoïque et un composé alkoxytitane pour former un premier composant de catalyseur, (2) de faire réagir ledit premier composant de catalyseur avec un halogénure organoaluminique pour obtenir un produit solide, et ensuite (3) de faire réagir le produit solide résultant avec un agent halogénant comprenant un halogénure de titane, caractérisé en ce que le dihalogénure de magnésium utilisé dans l'étape (1) a été combiné avec de l'eau en une quantité telle que l'on ait plus de 0,05 et jusqu'à 2 moles d'eau par mole de dihalogénure de magnésium.

2. Procédé selon la revendication 1, caractérisé en ce que ledit dihalogénure de magnésium comprend du dichlorure de magnésium; en particulier, où ledit composé alkoxytitane comprend un composé de la formule Ti(OR)$_4$, où chaque R est choisi individuellement parmi les groupes alkyle contenant de 1 à 20 atomes de carbone; en particulier, où ledit halogénure organoaluminique comprend du sesquichlorure d'éthylaluminium, où ledit dihalogénure de magnésium est le dichlorure de magnésium.

3. Procédé selon la revendication 1 ou 2, caractérisé en ce qu'un phénol est également utilisé dans l'étape (1) de préparation du premier composant de catalyseur; en particulier lorsque ledit phénol comprend du 4-phénylphénol.

4. Procédé selon l'une quelconque des revendications précédentes, caractérisé en ce que ledit ester d'acide benzoïque comprend du benzoate d'éthyle.

5. Procédé selon l'une quelconque des revendications précédentes, caractérisé en ce que ladite eau est ajoutée audit dihalogénure de magnésium pour que l'on ait de 0,5 à 2, de préférence de 0,5 à 1,5 moles d'eau pour chaque mole de dihalogénure de magnésium.

6. Procédé selon l'une quelconque des revendications précédentes, caractérisé en ce que ledit agent halogénant comprend du TiCl$_4$, du HSiCl$_3$ et du SiCl$_4$.

7. Procédé selon la revendication 6, caractérisé en ce que les rapports molaires respectifs de TiCl$_4$, HSiCl$_3$ et SiCl$_4$ sont d'environ 4/3,3/1.

8. Procédé selon l'une quelconque des revendications précédentes, caractérisé en ce que ledit composé alkoxytitane comprend du tétra-n-butoxyde de titane.

9. Utilisation du catalyseur, préparé selon l'une quelconque des revendications 1 à 8, pour la polymérisation ou la copolymérisation de α-oléfines, de préférence du propylène.

10. Mise en oeuvre de la revendication 9, caractérisée en ce que le catalyseur est utilisé en combinaison avec un cocatalyseur choisi parmi les hydrures et les composés organométalliques de métaux des groupes IA, II et IIIA du tableau périodique.

**Patentansprüche**

1. Verfahren zur Herstellung eines Katalysators für die Polymerisation von Olefinen, umfassend (1) die Umsetzung eines Magnesiumdihalogenids, eines Benzoesäureesters und einer Alkoxytitanverbindung unter Bildung einer ersten Katalysatorkomponente, (2) die Umsetzung der ersten Katalysatorkomponente mit einem Organoaluminiumhalogenid unter Bildung eines festen Produkts und anschließend (3) die Umsetzung des erhaltenen festen Produkts mit einem Halogenierungsmittel mit einem Gehalt an einem Titanhalogenid, dadurch gekennzeichnet, daß das in Stufe (1) verwendete Magnesiumdihalogenid mit Wasser in einer solchen Menge vereinigt worden ist, daß sich ein Wassergehalt von mehr als 0,05 bis 2 Mol pro Mol Magnesiumdihalogenid ergibt.

2. Verfahren nach Anspruch 1, dadurch gekennzeichnet, daß das Magnesiumdihalogenid Magnesiumdichlorid umfaßt; wobei insbesondere die Alkoxytitanverbindung eine Verbindung der Formel Ti(OR)$_4$ umfaßt, wobei die einzelnen Reste R individuell unter Alkylresten mit 1 bis 20 Kohlenstoffatomen ausgewählt sind; wobei insbesondere das Organoaluminiumhalogenid Ethylaluminiumsesquichlorid umfaßt; und wobei es sich bei dem Magnesiumdihalogenid insbesondere um Magnesiumdichlorid handelt.

3. Verfahren nach Anspruch 1 oder 2, dadurch gekennzeichnet, daß in Stufe (1) zur Herstellung der ersten Katalysatorkomponente zusätzlich ein Phenol verwendet wird; wobei das Phenol insbesondere 4-Phenylphenol umfaßt.

4. Verfahren nach einem der vorstehenden Ansprüche, dadurch gekennzeichnet, daß der Benzoesäureester Ethylbenzoat umfaßt.

5. Verfahren nach einem der vorstehenden Ansprüche, dadurch gekennzeichnet, daß das Wasser dem Magnesiumdihalogenid in einer solchen Menge zugesetzt wird, daß sich 0,5 bis 2 und vorzugsweise 0,5 bis 1,5 Mol Wasser pro Mol Magnesiumdihalogenid ergeben.

6. Verfahren nach einem der vorstehenden Ansprüche, dadurch gekennzeichnet, daß das Halogenierungsmittel TiCl$_4$, HSiCl$_3$ und SiCl$_4$ umfaßt.

7. Verfahren nach Anspruch 6, dadurch gekennzeichnet, daß die Molverhältnisse von TiCl$_4$, HSiCl$_3$ und SiCl$_4$ etwa 4/3,3/1 betragen.

8. Verfahren nach einem der vorstehenden Ansprüche, dadurch gekennzeichnet, daß die Alkoxytitanverbindung Titantetra-n-butoxid umfaßt.

9. Verwendung des nach einem der Ansprüche 1 bis 8 hergestellten Katalysators für die Polymerisation oder Copolymerisation von α-Olefinen, insbesondere von Propylen.

10. Ausführungsform nach Anspruch 9, dadurch gekennzeichnet, daß der Katalysator in Kombination mit einem Cokatalysator, der unter Hydriden und Organometallverbindungen von Metallen der Gruppen IA, II und IIIA des Periodensystems ausgewählt ist, verwendet wird.